# EUROPEAN PATENT APPLICATION

(11) **EP 1 933 061 A1**
(43) Date of publication of application: **18.06.2008**
(21) Application number: 07024202.9
(22) Date of filing: 13.12.2007
(51) Int. Cl.: F16H 55/36, F16H 35/10, F16D 9/00

(54) **Power transmission device of a compressor**

(30) Priority: 14.12.2006 JP 2006337229
(71) Applicant: KABUSHIKI KAISHA TOYOTA JIDOSHOKKI, Kariya-shi, Aichi-ken 448-8671 (JP)
(72) Inventor: Enokijima, Fuminobu c/o Kabushiki Kaisha Toyota Jidoshokki, Aichi-ken (JP); Yokomachi, Naoya c/o Kabushiki Kaisha Toyota Jidoshokki, Aichi-ken (JP); Fukanuma, Tetsuhiko c/o Kabushiki Kaisha Toyota Jidoshokki, Aichi-ken (JP)
(74) Representative: HOFFMANN EITLE

(57) **Abstract**

A power transmission device of a compressor includes a rotary shaft (15), a pulley (11), a hub (12,41), a power shutoff member (13), a spacer (21) and a cylinder (14,51). The power shutoff member shuts off excessive torque transmission between the pulley and the rotary shaft of the compressor. The spacer is disposed on the rotary shaft. The cylinder is disposed between the power shutoff member and the rotary shaft. The cylinder has an external thread portion formed at the outer periphery thereof for engagement with an internal thread portion of the power shutoff member and an internal thread portion formed at the inner periphery thereof for engagement with an external thread portion of the rotary shaft. The cylinder has a contacting surface for contact with a seating surface of the spacer and a seating surface for contact with a contacting surface of the hub at the axial end portion of the hub.

## Description

### BACKGROUND OF THE INVENTION

The present invention relates generally to a power transmission device having a torque limiting function, and more particularly to a power transmission device of a compressor for a vehicle air conditioner which is driven by an external drive source such as an engine through a belt.

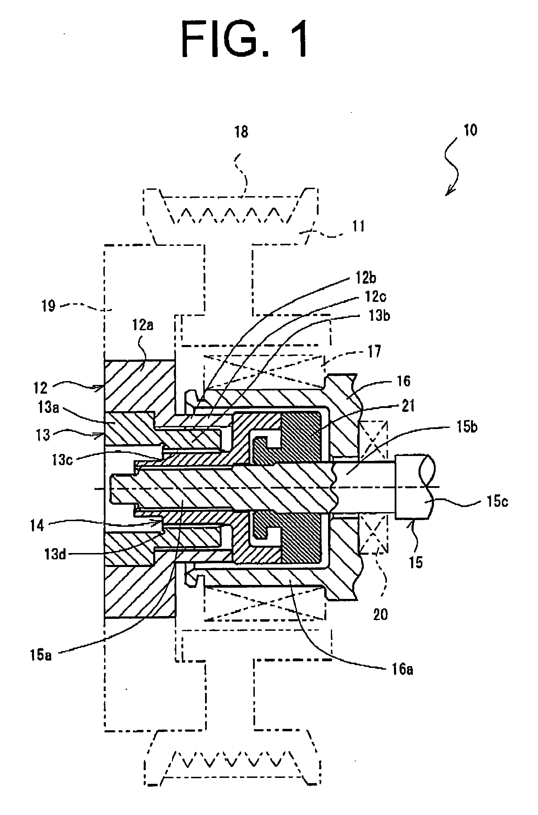

A power transmission device for transmitting power to a compressor has a torque limiter or a power interrupting device for forestalling a trouble such as a breakage of a power transmission belt in the event of a seizure in the compressor. A conventional power transmission device which is disclosed, for example, in Japanese Patent Application Publication No. 2006-266483, has a pulley, a casing, a hub and a power shutoff member (as described in pages 4-6 and Figs. 1-4 of the publication). To be more specific, the pulley is rotatably mounted to the casing, the hub is fitted in the pulley and the power shutoff member as a torque limiter is interposed between the hub and a rotary shaft. The front end portion of the rotary shaft has a thread portion, a large-diameter shaft portion and a shaft-side seating face. The thread portion has a thread on the outer circumference thereof. The diameter of the large-diameter shaft portion is larger than that of the thread portion. A shaft-side seating face is formed as a stepped portion between the thread portion and the large-diameter shaft portion. A washer is provided in contact with the shaft-side seating face. The casing and the rotary shaft are sealed by a shaft seal member (not shown) to prevent refrigerant gas and oil from leaking out of the compressor.

The power shutoff member functioning as a torque limiter is formed by a cylindrical body which includes a large-cylindrical portion and a small-cylindrical portion. The large-cylindrical portion is engaged with a part of the hub. The small-cylindrical portion has in the inner periphery thereof a thread portion which is engaged with the thread portion of the rotary shaft. The inner diameter of the large-cylindrical portion is slightly larger than that of the small-cylindrical portion and a cutout is formed at the transition between the inner peripheries of the large and small-cylindrical portions so as to form a breakable portion.

A torque produced in accordance with the rotation of the pulley is transmitted to the power shutoff member through the hub and then to the rotary shaft. If the seizure is occurred in the compressor, an excessively high axial force is applied to the engagement portion between the thread portion of the power shutoff member and the thread portion of the rotary shaft, so that the breakable portion of the power shutoff member is broken. Therefore, the torque transmission from the pulley is shut off, thereby preventing a belt connecting the pulley to the power source from being broken.

However, in the conventional power transmitting device disclosed in Japanese Patent Application Publication 2006-266483, heat is generated by sliding contact between the rotary shaft and the shaft seal member which is mounted on the rotary shaft of the compressor. The amount of the heat generated by the sliding contact is proportional to the coefficient of friction of the slide contact surfaces between the rotary shaft and the shaft seal member, load acting on the rotary shaft from the shaft seal member and the rotational speed of the rotary shaft. However, when the load is increased to enhance the seal performance of the shaft seal member or the load is increased due to the increase of the internal pressure of the compressor, the peripheral speed of the rotary shaft needs to be reduced so as to reduce the amount of the heat generated by the slide contact between the rotary shaft and the shaft seal member. The rotary shaft needs to be produced with a reduced diameter for reducing its peripheral speed. However, if the diameter of the rotary shaft is reduced, another problem may result. That is, reducing the diameter of the rotary shaft in the power transmission device having the power shutoff member will decrease the strength of the rotary shaft, so that breakage of the rotary shaft may occur before the breakable portion of the power shutoff member is broken. In other words, the power shutoff member may fail to function reliably.

The present invention is directed to a power transmission device of a compressor which permits the power shutoff member to function reliably.

### SUMMARY OF THE INVENTION

In accordance with an aspect of the present invention, a power transmission device of a compressor includes a rotary shaft, a pulley, a hub, a power shutoff member, a spacer and a cylinder. The rotary shaft is rotatably supported by a casing of the compressor. The rotary shaft has an external thread portion. The pulley is rotatably mounted on the casing. The hub is connected to the pulley for rotation therewith. The power shutoff member is joined to the hub. The power shutoff member is interposed between the hub and the rotary shaft. The power shutoff member has an internal thread portion and shuts off excessive torque transmission between the pulley and the rotary shaft. The spacer disposed on the rotary shaft. The spacer has a seating surface. The cylinder is disposed between the power shutoff member and the rotary shaft. The cylinder has an external thread portion formed at the outer periphery thereof for engagement with the internal thread portion of the power shutoff member and an internal thread portion formed at the inner periphery thereof for engagement with the external thread portion of the rotary shaft. The cylinder has a contacting surface for contact with the seating surface of the spacer and a seating surface for contact with a contacting surface of the hub at the axial end portion of the hub.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a longitudinal cross-sectional view showing a power transmission device according to a first preferred embodiment of the present invention;
Fig. 2 is an enlarged longitudinal cross-sectional view showing the power transmission device of the compressor according to the first preferred embodiment of the present invention;
Fig. 3 is an illustrative view showing the transmission of torque and various radiuses of rotation of the power transmission device according to the first preferred embodiment of the present invention;
Fig. 4 is a graph showing the torque-axial force characteristics of the power transmission device according to the first preferred embodiment of the present invention;
Fig. 5 is a graph showing the relation between the radius of rotation and the coefficient of friction in the torque-axial force characteristics of the power transmission device according to the first preferred embodiment of the present invention;
Fig. 6 is an enlarged longitudinal cross-sectional view showing a power transmission device according to a second preferred embodiment of the present invention; and
Fig. 7 is an enlarged longitudinal cross-sectional view showing a power transmission device according to a third preferred embodiment of the present invention.

### DETAILED DESCRIPTION OF THE PREFERRED EMBODIMENTS

The following will describe a power transmission device of the compressor according to the first embodiment of the present invention with reference to Fig. 1 through Fig. 5. As shown in Fig. 1, the power transmission device of the compressor of the first preferred embodiment is generally designated by reference numeral 10. The power transmission device 10 includes a pulley 11, a hub 12, a power shutoff member 13, a cylinder 14 and a casing 16 of the compressor. The power transmission device 10 is used for transmitting torque to the rotary shaft 15 from the pulley 11. The pulley 11 is rotatably mounted on the casing 16 of the compressor and driven by an engine and the like (not shown). The hub 12 is connected to the pulley 11 for rotation therewith. The power shutoff member 13 functioning as a torque limiter is interposed between the hub 12 and the rotary shaft 15.

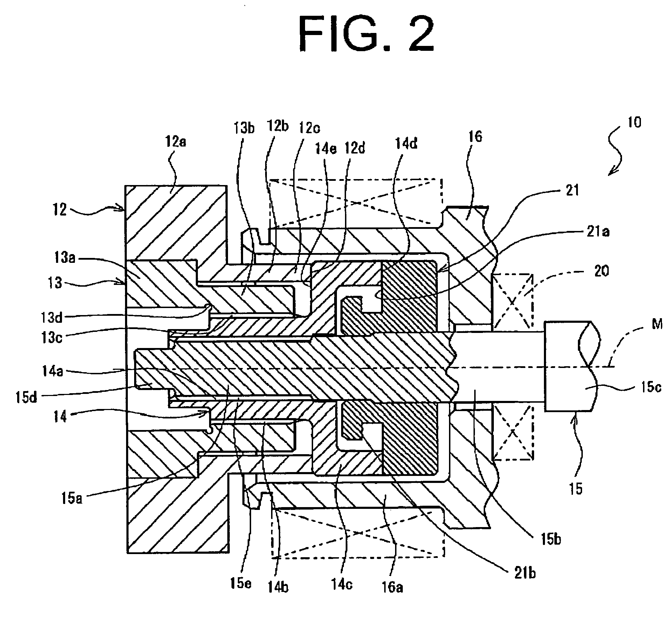

The pulley 11 is rotatably mounted through a bearing 17 on a boss 16a which is provided at one end of the casing 16. A belt 18 is wound around the pulley 11, so that the pulley 11 is rotated by way of the belt 18 which is also connected to an external source such as an engine or a motor (not shown). The hub 12 is made of a ferrous material and formed in a stepped cylindrical shape. That is, the hub 12 includes a large-diameter portion 12a and a small-diameter portion 12b which has a relatively smaller outer diameter than the large-diameter portion 12a. The small-diameter portion 12b has an axial end portion 12c extending toward the rear side of the compressor. The axial end portion 12c includes a hub-side contacting surface 12d which is contactable with a cylinder-side seating surface 14e described later (refer to Fig. 2). In Fig. 1, the right side of the drawing corresponds to the rear side of the power transmission device 10 and the left side to the front side of the power transmission device 10. The pulley 11 is connected to the hub 12 through a connecting member 19 thereby to transmit torque from the pulley 11 to the hub 12.

In Fig. 2, the power transmission device 10 further has a power shutoff member 13 which functions as a torque limiter. The power shutoff member 13 is of a cylindrical shape including a large-diameter portion 13a and a small-diameter portion 13b whose outer diameter is smaller than that of the large-diameter portion 13a. The large-diameter portion 13a of the power shutoff member 13 is connected to the hub 12. The large-diameter portion 13a of the power shutoff member 13 with a polygonal shape is fitted into a corresponding polygonal hole which is formed by the inner peripheral surface of the large-diameter portion 12a of the hub 12. By this method, the power shutoff member 13 and the hub 12 are joined together securely. The small-diameter portion 13b is formed at the inner periphery thereof with an internal thread portion 13c. The cylinder 14 is formed at the outer periphery thereof with an external thread portion 14b which is engaged with the internal thread portion 13c of the small-diameter portion 13b of the power shutoff member 13. The inner diameter of the large-diameter portion 13a is slightly greater than that of the small-diameter portion 13b. A cutout as a breakable portion 13d is formed at the transition between the large-diameter portion 13a and the small-diameter portion 13b. Thus, the power shutoff member 13 is easily broken at the breakable portion 13d when an excessively high axial tension is applied to the power shutoff member 13. In other words, the power shutoff member 13 shuts off excessive torque transmission between the rotary shaft 15 and the pulley 11.

Meanwhile, the rotary shaft 15 is made of a ferrous material and rotatably supported in the casing 16. The rotary shaft 15 is formed so as to include a small-diameter portion 15a, a medium-diameter portion 15b and a large-diameter portion 15c which are disposed in this order as viewed from the front side of the power transmission device 10, as clearly shown in Fig. 2. A shaft seal device 20 in the form of a lip seal is provided between the casing 16 and the rotary shaft 15 for preventing refrigerant gas and oil from leaking out of the compressor and maintaining the airtightness of the compressor. In operation of the compressor, the shaft seal device 20 is kept in slide contact with the medium-diameter portion 15b of the rotary shaft 15. Because the medium-diameter portion 15b of the rotary shaft 15 is formed with a smaller diameter than the large-diameter portion 15c, the peripheral speed of the medium-diameter portion 15b in sliding contact with the shaft seal device 20 is lower than the peripheral speed of the large-diameter portion 15c, so that the heat generation between the medium-diameter portion 15b and the shaft seal device 20 is reduced and durability of the shaft seal device 20 is improved, accordingly.

As shown in Fig. 2, a front end 15d of the small-diameter portion 15a of the rotary shaft 15 is formed so as to be held by a tool. The small-diameter portion 15a of the rotary shaft 15 is formed at the outer periphery thereof with an external thread portion 15e. A cylindrical spacer 21 is press-fitted on the medium-diameter portion 15b as a screw seat member at a border between the small-diameter portion 15a and the medium-diameter portion 15b. The spacer 21 is provided as a radially expanded portion of the rotary shaft 15. The spacer 21 is pressed against the region adjacent to the step between the small-diameter portion 15a and the medium-diameter portion 15b so as to be fixedly positioned. As shown in Fig. 2, the spacer 21 has at the front end face thereof a shaft-side seating surface 21 a in the form of an annular surface extending perpendicular to the axis M of the rotary shaft 15. The shaft-side seating surface 21 a is in contact with the cylinder-side contacting surface 14d of the cylinder 14. The spacer 21 has a hook portion 21 b used for extracting the spacer 21 from the rotary shaft 15.

The cylinder 14 which is made of ferrous material has a cylindrical shape and is disposed between the rotary shaft 15 and the power shutoff member 13. The cylinder 14 includes at the inner periphery thereof with an internal thread portion 14a for engagement with the external thread portion 15e of the rotary shaft 15. The cylinder 14 further includes at the outer periphery thereof with an external thread portion 14b for engagement with the internal thread portion 13c of the power shutoff member 13. The cylinder 14 has a flange 14c extending rearward and a cylinder-side contacting surface 14d at the rear end face of the flange 14c for contact with the shaft-side seating surface 21a of the spacer 21. The aforementioned cylinder-side seating surface 14e is provided at the front end surface of the flange 14c for contact with the hub-side contacting surface 12d of the axial end portion 12c of the hub 12.

The large-diameter portion 13a is fitted into the large-diameter portion 12a, so that the hub 12 and the power shutoff member 13 are integrated. Then, the internal thread portion 14a is threaded on the external thread portion 15e until the cylinder-side contacting surface 14d of the cylinder 14 is pressed against the shaft-side seating surface 21a of the spacer 21, so that the cylinder 14 is securely connected or fastened to the rotary shaft 15. Subsequently, the internal thread portion 13c is threaded on the external thread portion 14b until the hub-side contacting surface 12d is brought into pressing contact with cylinder-side seating surface 14e of the cylinder 14 at the outer periphery, so that the power shutoff member 13 is securely connected or fastened to the cylinder 14.

Meanwhile, a lubricant agent is provided between the external thread portion 14b of the cylinder 14 and the internal thread portion 13c of the power shutoff member 13 and between the cylinder-side seating surface 14e and the hub-side contacting surface 12d. Carbon dioxide is used as a refrigerant gas in the compressor.

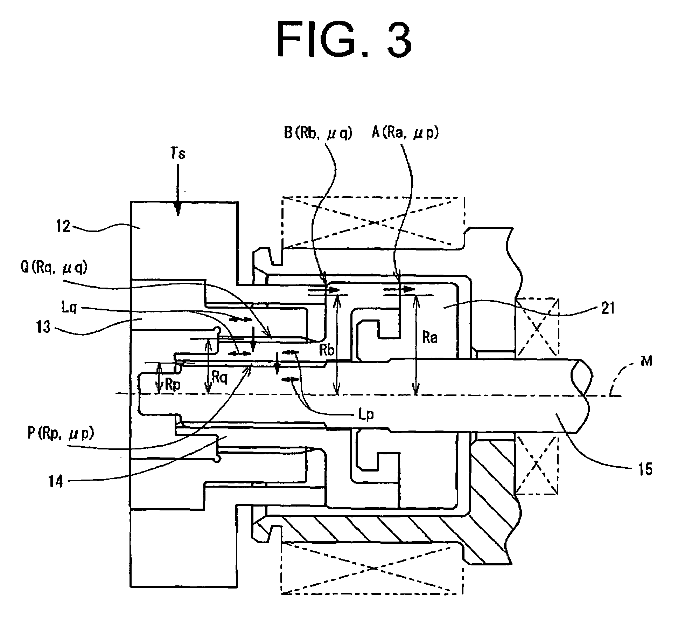

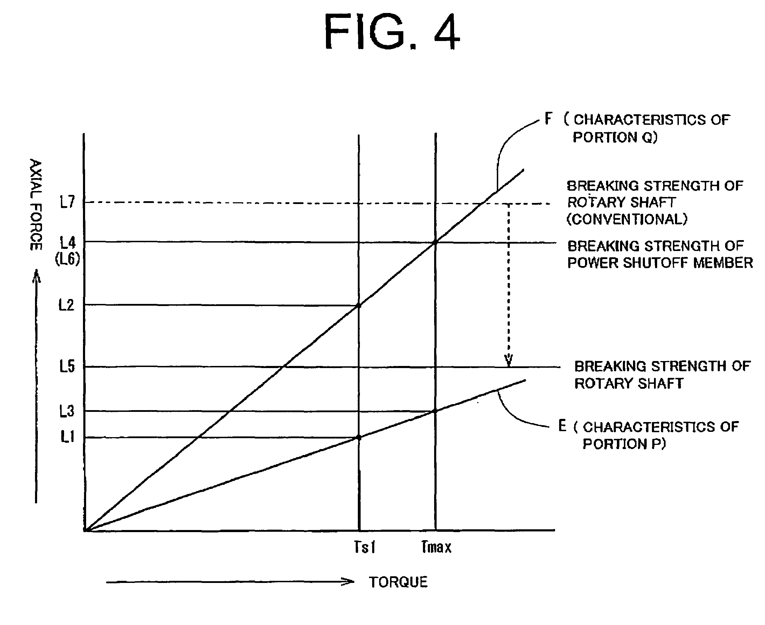

The following will describe the operation of the power transmission device 10 as constructed above. Referring to Fig. 3, P represents the thread engagement portion of the internal thread portion 14a of the cylinder 14 and the external thread portion 15e of the rotary shaft 15. Similarly, Q represents the thread engagement portion of the internal thread portion 13c of the power shutoff member 13 and the external thread portion 14b of the cylinder 14. A represents the contacting portion between the cylinder-side contacting surface 14d of the cylinder 14 and the shaft-side seating surface 21a of the spacer 21 which is press-fitted on the rotary shaft 15. B represents the contacting portion between the hub-side contacting surface 12d of the hub 12 and the cylinder-side seating surface 14e of the cylinder 14. In Fig. 4, hatchings of the figure are partially omitted because of easy understanding.

In transmitting torque from the hub 12 to the cylinder 14 through the thread engagement portion Q and the contacting portion B, firstly the torque is transmitted from the hub 12 and the power shutoff member 13 to the cylinder 14. Torque Ts, or the torque transmitted from the pulley 11 to the hub 12, is transmitted through the thread engagement portion Q and the contacting portion B to the cylinder 14 as indicated by the arrows in Fig. 3. An axial force is generated in the axial direction in the thread engagement portion Q in response to the transmitted torque. The axial forces represented by Lq are generated in the power shutoff member 13 and the cylinder 14 respectively, and the two axial forces are substantially equal in strength.

The torque Ts transmitted to the cylinder 14 is further transmitted through the thread engagement portion P and the contacting portion A to the rotary shaft 15. An axial force is also generated in the thread engagement portion P. The axial forces designated by Lp are generated in both of the cylinder 14 and the rotary shaft 15, respectively, and these two axial forces Lp are substantially equal in strength.

Fig. 4 is a graph showing the torque-axial force characteristics in the thread engagement portions P, Q. The horizontal axis indicates the torque and the vertical axis indicates the axial force. The characteristics at the thread engagement portion P is represented by the line E and the characteristics at the thread engagement portion Q is represented by the line F. As is obvious from the comparison between the characteristics lines E and F in the graph, the axial force at the thread engagement portion P is smaller than that of in the thread engagement portion Q at any given torque. That is, the axial force acting on the rotary shaft 15 is smaller than that on the power shutoff member 13. In addition, the axial force L1 for a torque Ts1 at the thread engagement portion P is smaller than the axial force L2 for the same torque Ts1 at the thread engagement portion Q.

L3 and L4 represent the axial forces developed at the thread engagement portions P, Q when the torque Tmax is applied thereto, respectively. The breaking strength of the rotary shaft 15 is represented by L5 and the breaking strength of the power shutoff member 13 as a torque limiter is represented by L6. The power transmission device 10 is so arranged that the breaking strength L5 is greater than the axial force L3 and also the axial force L4 is substantially the same as the breaking strength L6. If the seizure is occurred in the compressor, the torque Tmax is applied to the thread engagement portions P, Q and the axial force L3 is generated in the rotary shaft 15 and the axial force L4 is generated in the power shutoff member 13, accordingly. Because the axial force L4 is set substantially the same as the breaking strength L6, the power shutoff member 13 is broken at the breakable portion 13d. Because the breaking strength L5 is set larger than the axial force L3, breakage of the rotary shaft 15 does not occur.

In case the cylinder 14 is not provided in the power transmission device 10 and the power shutoff member 13 is directly mounted to the rotary shaft 15, the torque-axial force characteristics would be represented by the single line F and, therefore, axial forces of substantially the same magnitude would be developed in the power shutoff member 13 and the rotary shaft 15. In such case the breaking strength of rotary shaft which is represented by L7 in Fig. 4 would have to be set larger than the breaking strength L6 as indicated by the chain double-dot line in Fig. 4. According to the present invention, however, the provision of the cylinder 14 and the thread engagement portions P, Q having different torque-axial force characteristics E and F makes it possible to set the axial force acting on the rotary shaft 15 smaller than the axial force acting on the power shutoff member 13, with the result that the breaking strength for the rotary shaft 15 may be reduced from the level 7 to the level 5. In other words, the diameter of the rotary shaft 15 may be reduced.

Transmission torque of a rotary component is proportional to radius of rotation, coefficient of friction and axial force. As shown in Fig. 3, the radius of rotation of the thread engagement portion P is represented by Rp and the radius of rotation of the thread engagement portion Q is represented by Rq, respectively. The radius of rotation of the contacting portion A is represented by Ra and the radius of rotation of the contacting portion B is represented by Rb, respectively. The radiuses of rotation Rp, Rq, Ra and Rb correspond to the radial distances from the axis M of the rotary shaft 15 to P, Q, A and B. The coefficients of friction between the cylinder 14 and rotary shaft 15 and between the cylinder 14 and the spacer 21 (or between the flange 14c as a contacting portion and the shaft-side seating surface 21a) are represented by µp. The coefficients of friction between the power shutoff member 13 and the cylinder 14 and between the hub 12 and the cylinder 14 (or between the axial end portion 12c and the flange 14c as a contacting portion) are represented by µq. The coefficients of friction at the thread engagement portion P and the contacting portion A are µp and the coefficients of friction at the thread engagement portion Q and the contacting portion B are µq. The above coefficients of friction are provided on the assumption that the rotary shaft 15 and the spacer 21 are made of the same material, and that the power shutoff member 13 and the hub 12 are made of the same material.

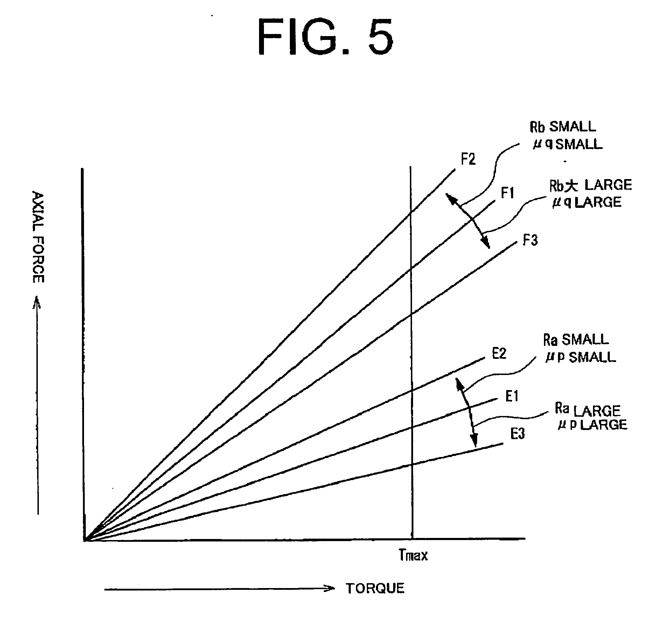

Fig. 5 is a graph showing the influence of radius of rotation R and coefficient of friction µ on the torque-axial force characteristics. Referring to the torque-axial force characteristics line E1 at the thread engagement portion P in the graph, when the radius of rotation Ra or the coefficient of friction µp is decreased, the characteristics line E1 is changed in such a way that the inclination angle of the line E1 relative to the horizontal axis is increased or the line E1 is shifted toward the line E2. When the radius of rotation Ra or the coefficient of friction µp is increased, on the other hand, the line E1 for the thread engagement portion P is changed in such a way that the inclination angle of the line E1 relative to the horizontal axis is decreased or the line E1 is shifted toward the line E3. Now referring to the torque-axial force characteristics line F1 at the thread engagement portion Q in the graph, when the radius of rotation Rb or the coefficient of friction µq is decreased, the line F1 for the thread engagement portion Q is changed in such a way that the inclination angle of the line F1 relative to the horizontal axis is increased or the line F1 is shifted toward the line F2. When the radius of rotation Rb or the coefficient of friction µq is increased, the characteristics line F1 for the thread engagement portion Q is changed in such a way that the inclination angle of the line F1 relative to the horizontal axis is decreased or the line F1 is shifted toward the line F3. Thus, the torque-axial force characteristics are varied due to a change of the radiuses of rotation Rp, Rq. The difference between the radiuses of rotation Rp, Rq is relatively small, and, therefore, the influence of the radiuses of rotation Rp, Rq on the torque-axial force characteristics is small as compared to the influence of difference between the coefficients of friction µp, µq on the characteristics. Thus, the description of the influence of the difference between the radiuses of rotation Rp, Rq on the torque-axial force characteristics will be omitted. It is noted that as coefficients of friction µp, µq are increased, friction losses at the thread engagement portions P, Q are increased and the axial forces are decreased. As the coefficients of friction µp, µq are decreased, on the other hand, friction losses at the thread engagement portions P, Q are decreased and the axial forces are increased.

The radiuses of rotation Ra, Rb are factors related to the transmission torques at the contacting portions A, B, respectively. That is, when the radiuses of rotation Ra, Rb are decreased and the transmission torques at the contacting portions A, B are decreased, the transmission torques at the thread engagement portions P, Q are increased, and the axial forces are increased, accordingly. When the radiuses of rotation Ra, Rb are increased and the transmission torques at the contacting portions A, B are increased, the transmission torques at the thread engagement portions P, Q are decreased and the axial forces are decreased, accordingly.

In the first preferred embodiment, the radius of rotation Ra is substantially the same as the radius of rotation Rb and the values for the radiuses are relatively large. In addition, the thread engagement portion Q and the contacting portion B are coated with lubricant, but no lubricant is applied to the thread engagement portion P and the contacting portion A. Therefore, the coefficient of friction µp is larger than µq. In other words, it is so arranged in the first preferred embodiment that the radius of rotation Ra is substantially the same as Rb, but the coefficients of friction µp and µq are set different. Therefore, the friction losses at the thread engagement portion Q and the contacting portion B are decreased, and the axial force in the power shutoff member 13 is increased, the power shutoff member 13 can be broken reliably by application of the predetermined torque. Meanwhile, because the friction losses at the thread engagement portion P and the contacting portion A are increased, the axial force in the rotary shaft 15 is decreased to prevent the rotary shaft 15 from breakage.

As stated above, the torque-axial force characteristics E, F at the thread engagement portions P, Q may be varied by adjusting the radius of rotation R and the coefficient of friction µ, as required. Thus, in accordance with the breaking strengths of the rotary shaft and the power shutoff member, the radius of rotation R and the coefficient of friction µ may be adjusted to an optimum setting. Especially, the torque-axial force characteristics E, F have variations in the individual compressors, and the like inclination angle between the characteristics E, F also has variations, on the premise of which, optimum setting may be obtained.

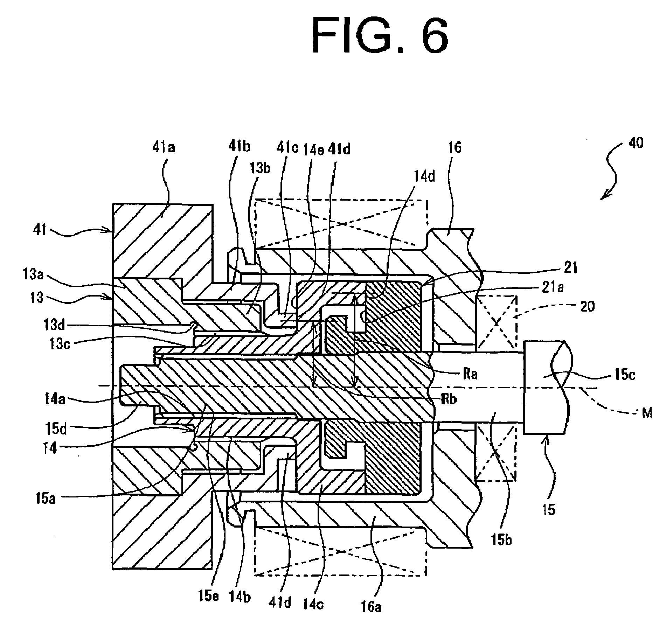

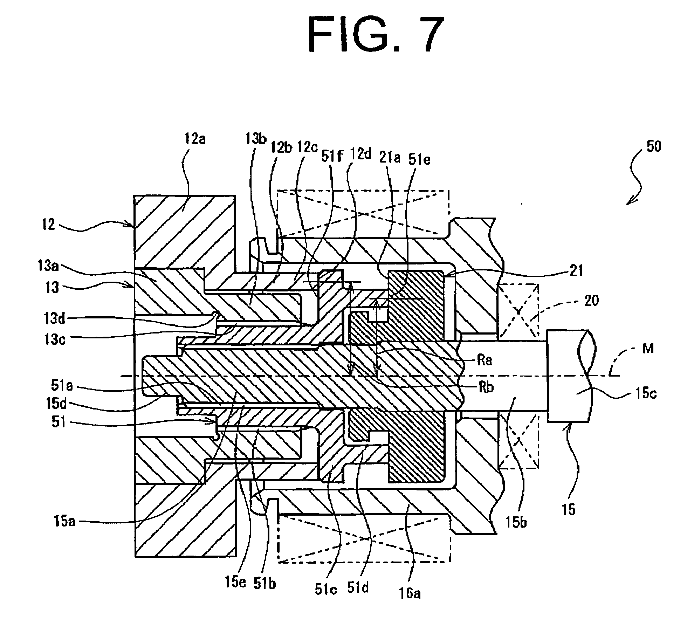

The power transmission device 10 of the present embodiment has the following advantageous effects.
(1) According to the first preferred embodiment, the large-diameter portion 13a is fitted into the large-diameter portion 12a, so that the hub 12 and the power shutoff member 13 are integrated. Then, the internal thread portion 14a is threaded on the external thread portion 15e until the cylinder-side contacting surface 14d of the cylinder 14 is pressed against the shaft-side seating surface 21a of the spacer 21, so that the cylinder 14 is securely connected or fastened to the rotary shaft 15. Subsequently, the internal thread portion 13c is threaded on the external thread portion 14b until the hub-side contacting surface 12d is brought into pressing contact with cylinder-side seating surface 14e of the cylinder 14 at the outer periphery, so that the power shutoff member 13 is securely connected or fastened to the cylinder 14. By virtue of such fastening, the torque transmitted from the pulley 11 to the hub 12 is further transmitted to the rotary shaft 15 through the power shutoff member 13 and the cylinder 14. As the torque is thus transmitted, the axial forces are generated in the axial direction in the thread engagement portion Q between the power shutoff member 13 and the cylinder 14 and in the thread engagement portion P between the cylinder 14 and the rotary shaft 15. According to the torque-axial force characteristics of the thread engagement portions P, Q, the axial force acting on the thread engagement portion P at a given torque may be decreased relative to the axial force acting on the thread engagement portion Q at the same torque. Thus, the axial force acting on the rotary shaft 15 may be decreased relative to the axial force acting on the power shutoff member 13, with the result that the diameter of the rotary shaft 15 may be reduced.
(2) When the axial forces developed at the thread engagement portions P, Q when the torque Tmax is applied thereto are represented by L3, L4, respectively. Also, the breaking strengths of the rotary shaft 15 and the power shutoff member 13 are represented by L5, L6, respectively. L5 is greater than L3 and L4 is substantially the same as L6. The axial forces L3, L4 are generated in the rotary shaft 15 and the power shutoff member 13, respectively, when the torque Tmax is applied to the thread engagement portions P, Q in the event of a seizure in the compressor. However, because the axial force L4 is set substantially the same as the breaking strength L6, the power shutoff member 13 is broken at the breakable portion 13d, and because the breaking strength L5 is set greater than the axial force L3, breakage of the rotary shaft 15 does not occur. That is, the breakable portion 13d is firstly broken when an excessive torque Tmax is applied, thereby to block the torque transmission from the hub 12 to the rotary shaft 15 and to prevent any trouble such as a break of the belt 18.
(3) Due to the application of the power shutoff member 13, the diameter of medium-diameter portion 15b of the rotary shaft 15 which is in slide contact with the shaft seal device 20 may be reduced. As a result, the peripheral speed of the medium-diameter portion 15b which is in slide contact with the shaft seal device 20 is reduced, so that heat generation in the shaft seal device 20 is suppressed and the durability of the shaft seal device 20 is improved.
(4) The thread engagement portion Q and the contacting portion B are coated with lubricant, but no lubricant is applied to the thread engagement portion P and the contacting portion A. Thus, the coefficient of friction µp is larger than µq and, therefore, the friction losses at the thread engagement portion Q and the contacting portion B are less than those at the thread engagement portion P and the contacting portion A. As a result, the power shutoff member 13 can be broken reliably when the axial force in the power shutoff member 13 is increased to reach a predetermined torque. Meanwhile, because the friction losses at the thread engagement portion P and the contacting portion A are larger than the friction losses on the thread engagement portion Q and the contacting portion B, the axial force in the rotary shaft 15 is decreased and the rotary shaft 15 is certainly prevented from breakage. In addition, because the coefficient of friction may be decreased just by application of lubricant, selection of materials for the respective parts for the power transmission device can be done with ease. Also, the materials are not need to be changed and the power transmission device 10 is easy to assemble.
(5) The shaft-side seating surface 21 a is formed by press-fitting the spacer 21 on the rotary shaft 15. Thus, the number of manufacturing processes may be reduced as compared to the case where the rotary shaft 15 is directly formed with the shaft-side seating surface 21 a.
(6) When carbon dioxide is used as a refrigerant for the compressor, the load applied from the shaft seal device 20 to the rotary shaft 15 is increased by the increase of the internal pressure of the compressor. Thus, heat generation at the slide contact portion between the medium-diameter portion 15b of the rotary shaft 15 and the shaft seal device 20 needs to be suppressed. This can be accomplished by reducing the diameter of the medium-diameter portion 15b of the rotary shaft 15 and hence the peripheral speed of the rotary shaft 15 at the slide contact portion. Therefore, the compressor may be adapted to use of carbon dioxide as a refrigerant for the compressor.
   The following will describe a second preferred embodiment of the present invention with reference to FIG. 6. The second preferred embodiment differs from the first preferred embodiment in that the shape of the axial end portion 12c of the first preferred embodiment are modified. For the convenience of explanation, common or similar elements or parts are designated by the same reference numerals as those used in the first preferred embodiment and, therefore, the description thereof will be omitted and only the modifications will be described.
   Referring to Fig. 6, showing a power transmission device 40 of the second preferred embodiment according to the present invention, the power transmission device 40 includes a hub 41 of a stepped cylindrical shape having a large-diameter portion 41 a, a medium-diameter portion 41 b and a small-diameter portion 41c arranged in this order as viewed from the front side of the compressor. The small-diameter portion 41 c extending rearward of the compressor from the medium-diameter portion 41 b has a shaft-side end portion 41d having a hub-side contacting surface 41e which is axially contacted to the cylinder-side seating surface 14e.
   In the second preferred embodiment, the connected surfaces between the cylinder-side contacting surface 14d of the cylinder 14 and the shaft-side seating surface 21a of the rotary shaft 15 correspond to the contacting portion A and the connected surfaces between the hub-side contacting surface 41 e of the hub 41 and the cylinder-side seating surface 14e of the cylinder 14 correspond to the contacting portion B. The radiuses of rotation Ra, Rb of the contacting portions A, B are set such that Rb is smaller than Ra. Thus, the present second embodiment differs from the first embodiment also in that the radiuses of rotation Ra, Rb, as well as the coefficients of friction µp, µq, are different from each other. The variation of Rb means shifting the characteristics line F1 for the thread engagement portion Q toward the line F2 in the torque-axial force characteristics graph in Fig. 5.
   As a result, the axial force in the thread engagement portion Q or the axial force acting on the power shutoff member 13 may be increased as compared to the axial force acting on the rotary shaft 15. For example, in consideration of the individual compressors, the characteristics E1, F1 cannot be represented by single lines due to exist of the fluctuation in the manufacture process. Therefore, the design of the power transmission device 40 is made on the premise of such fluctuations. If the characteristics E1 and F1 are overlapped each other, the breaking strengths of rotary shaft and the power shutoff member may not set properly. However, decreasing the radius of rotation Rb thereby to increase the inclination angle of the characteristics line F1, the characteristics lines E1, F1 will have no overlapped part.
   It is readily understood by substituting the hub-side contacting surface 12d of the first embodiment with the hub-side contacting surface 41e of the second embodiment. The operation of the power transmission device 40 of the second preferred embodiment is substantially the same as the power transmission device 10 of the first embodiment. Therefore, the detailed description of the operation of the power transmission device 40 will be omitted.
   According to the power transmission device 40 of the second preferred embodiment, the same advantageous effects as mentioned in the paragraphs (1) through (6) for the first embodiment are obtained. In addition, the following advantageous effect is obtained.
(7) Decreasing the radius of rotation Rb of the contacting portion B between the hub-side contacting surface 41e of the hub 41 and the cylinder-side seating surface 14e of the cylinder 14 thereby to increase the inclination angle of the characteristics line F for the thread engagement portion Q relative to the horizontal axis, the axial force acting on the power shutoff member 13 is increased.
   The following will describe a third preferred embodiment according to the present invention with reference to Fig. 7. The third preferred embodiment differs from the first preferred embodiment in that the shape of the flange 14c of the first preferred embodiment is modified. The other structure of the power transmission device 50 is substantially the same as that of the first preferred embodiment and, therefore, common or similar elements or parts are designated by the same reference numerals as those used in the first preferred embodiment and the description thereof will be omitted.
   Referring to Fig. 7 showing a power transmission device 50 of the third embodiment according to the present invention, the power transmission device 50 includes a cylinder 51 having formed at the inner periphery thereof an internal thread portion 51a and screwed over the rotary shaft 15 through engagement between the internal thread portion 51 a of the cylinder 51 and the external thread portion 15e of the rotary shaft 15. The cylinder 51 is further formed at the outer periphery thereof with an external thread portion 51b for engagement with the internal thread portion 13c of the power shutoff member 13. In addition, the cylinder 51 has a flange 51c extending radially outward and a projection 51d extending from a radially inner region of the flange 51c axially rearward of the compressor. The projection 51d has at the rear end thereof a cylinder-side contacting surface 51e for contact with the shaft-side seating surface 21 a of the rotary shaft 15. The flange 51c has at the front end face thereof a cylinder-side seating surface 51f for contact with the hub-side contacting surface 12d of the axial end portion 12c of the hub 12.
   The connected surfaces between the cylinder-side contacting surface 51e of the cylinder 51 and the shaft-side seating surface 21 a of the rotary shaft 15 in the third preferred embodiment corresponds to the contacting portion A of the first preferred embodiment. The connected surfaces between the hub-side contacting surface 12d of the hub 12 and the cylinder-side seating surface 51f of the cylinder 51 corresponds to the contacting portion B of the first embodiment. The radiuses of rotation Ra, Rb of the contacting portions A, B are set such that Ra is smaller than Rb. Then, lubricant is applied to the thread engagement portion P and the contacting portion A, but no lubricant is applied to the thread engagement portion Q and the contacting portion B. Thus, the coefficient of friction µp is smaller than µq. That is, the coefficients of friction µp, µq, as well as the radiuses of rotation Ra, Rb, are different from each other in the third preferred embodiment.
   The variation of Ra and µp means shifting the characteristics line E1 for the thread engagement portion P toward the line E2 or increase in the inclination angle relative to the horizontal axis in the torque-axial force characteristics graph in Fig. 5. On the other hand, the variation of Rb and µq means shifting the characteristics line F1 for the thread engagement portion Q toward the line F3 or decrease in the inclination angle relative to the horizontal axis in the torque-axial force characteristics graph in Fig. 5. Therefore, the torque-axial force characteristics E, F at the thread engagement portions P, Q may be reversed. That is, the axial force in the thread engagement portion P or the axial force acting on the rotary shaft 15 is increased, while the axial force in the thread engagement portion Q or the axial force acting on the power shutoff member 13 is decreased. In this case, the rotary shaft 15 may be broken before the power shutoff member 13 is broken.
   According to the power transmission device 50 of the third preferred embodiment, the following advantageous effects are obtained.
(8) The radiuses of rotation Ra, Rb and the coefficients of friction µp, µq are set such that Ra is smaller than Rb and µp is smaller than µq. Therefore, the inclination angle of the characteristics line E1 for the thread engagement portion P relative to the horizontal axis in the graph of Fig. 5 can be increased. On the other hand, the inclination angle of the characteristics line F1 for the thread engagement portion Q relative to the horizontal axis can be decreased. Thus, the torque-axial force characteristics E, F of the thread engagement portions P, Q may be reversed, and the rotary shaft 15 may be broken before a breakage of the power shutoff member 13.

The present invention is not limited to the above-described embodiments but may be modified into the following examples.

Though the coefficient of friction µp is larger than µq in the first and second embodiments and µp is smaller than µq in the third embodiment, the coefficients of friction µp and µq may be set at substantially the same value. In this case, lubricant is applied to the thread engagement portions P, Q and the contacting portions A, B, thereby reducing the variations in the torque-axial force characteristics E, F.

In the first through third embodiments, the coefficients of friction at the thread engagement portion P and the contacting portion A are set at µp and the coefficients of friction at the thread engagement portion Q and the contacting portion B at µq. Although the coefficients of friction at the thread engagement portions P, Q and also at the contacting portions A, B are different from each other, the power transmission device may be designed such that there is a difference either one of between the coefficients of friction at the thread engagement portions P, Q and between the contacting portions A, B. Specifically, there may be a difference between the coefficients of friction at the thread engagement portions P, Q and no difference between the coefficients of friction at the contacting portions A, B. Alternatively, there may be a difference between the coefficients of friction at the contacting portions A, B and no difference between the coefficients of friction at the thread engagement portions P, Q.

Besides the use or non-use of lubricant, a material such as rubber may be used appropriately as a means for adjusting the coefficients of friction µp, µq. In other words, the power shutoff member and the hub may be made of a material which has a different coefficients of friction from that of the rotary shaft and the cylinder.

Therefore, the present examples and embodiments are to be considered as illustrative and not restrictive, and the invention is not to be limited to the details given herein but may be modified within the scope of the appended claims.

## Claims

1. A power transmission device (10, 40, 50) for a compressor, the power transmission device comprising:
a rotary shaft (15) rotatably supported by a casing (16), the rotary shaft (15) having an external thread portion (15e);
a pulley (11) rotatably mounted on the casing (16);
a hub (12, 41) connected to the pulley (11) for rotation therewith; and
a power shutoff member (13) joined to the hub (12, 41), the power shutoff member (13) being interposed between the hub (12, 41) and the rotary shaft (15), the power shutoff member (13) having an internal thread portion (13c), the power shutoff member (13) capable of shutting off excessive torque transmission between the pulley (11) and the rotary shaft (15),
**characterized by**
a spacer (21) disposed on the rotary shaft (15), the spacer (21) having a seating surface (21a), and
a cylinder (14, 51) disposed between the power shutoff member (13) and the rotary shaft (15), the cylinder (14, 51) having an external thread portion (14b, 51f) formed at the outer periphery thereof for engagement with the internal thread portion (13c) of the power shutoff member (13) and an internal thread portion (14a, 51e) formed at the inner periphery thereof for engagement with the external thread portion (15e) of the rotary shaft (15), the cylinder (14, 51) having a contacting surface (14, 51) for contact with the seating surface (21a) of the spacer (21) and a seating surface (14e, 51f) for contact with a contacting surface (12d, 41e) of the hub (12, 41) at the axial end portion of the hub (12, 41).

2. The power transmission device (10, 40, 50) according to claim 1, **characterized in that** the radial distances from the axis of the rotary shaft (15) to the contacting surface (14d, 51e) of the cylinder (14, 51) for contact with the seating surface (21a) of the spacer (21) and from the axis of the rotary shaft (15) to the contacting surface (12d, 41e) of the hub (12, 41) for contact with the seating surface (14e, 51f) of the cylinder (14, 51) are different from each other.

3. The power transmission device (10, 40, 50) according to claim 2, **characterized in that** the radial distance from the axis of the rotary shaft (15) to the contacting surface (12d, 41e) of the hub (12, 41) is smaller than that from the axis of the rotary shaft (15) to the contacting surface (14d, 51e) of the cylinder (14, 51).

4. The power transmission device (10, 40, 50) according to any one of claim 1 through claim 3, **characterized in that** the coefficients of friction between the power shutoff member (13) and the cylinder (14, 51), and between the cylinder (14, 51) and the rotary shaft (15) are different, and/or the coefficients of friction between the contacting surface (12d, 41e) of the hub (12, 41) and the seating surface (14e, 51f) of the cylinder (14, 51), and between the contacting surface (14d, 51e) of the cylinder (14, 51) and the seating surface (21a) of the spacer (21) are different.

5. The power transmission device (10, 40, 50) according to any one of claim 2 through claim 4, **characterized in that** the coefficient of friction between the power shutoff member (13) and the cylinder (14, 51) is smaller than the coefficient of friction between the cylinder (14, 51) and the rotary shaft (15), and/or the coefficient of friction between the contacting surface (12d, 41e) of the hub (12, 41) and the seating surface (14e, 51f) of the cylinder (14, 51) is smaller than the coefficient of friction between the contacting surface (14d, 51e) of the cylinder (14, 51) and the seating surface (21a) of the spacer (21).

6. The power transmission device (10, 40, 50) according to any one of claim 2 through claim 5, **characterized in that** lubricant is applied between the power shutoff member (13) and the cylinder (14, 51), and preferably also between the contacting surface (12d, 41e) of the hub (12, 41) and the seating surface (14e, 51f) of the cylinder (14, 51).

7. The power transmission device (10, 40, 50) according to any one of claim 2 through claim 4, **characterized in that** the coefficient of friction between the power shutoff member (13) and the cylinder (14, 51) is larger than the coefficient of friction between the cylinder (14, 51) and the rotary shaft (15), and/or the coefficient of friction between the contacting surface (12d, 41e) of the hub (12, 41) and the seating surface (14e, 51f) of the cylinder (14, 51) is larger than the coefficient of friction between the contacting surface (14d, 51e) of the cylinder (14, 51) and the seating surface (21a) of the spacer (21).

8. The power transmission device (10, 40, 50) according to any one of claim 2 through claim 4 and claim 7, **characterized in that** lubricant is applied between the cylinder (14, 51) and the rotary shaft (15), and preferably also between the contacting surface (14d, 51e) of the cylinder (14, 51) and the seating surface (21a) of the spacer (21).

9. The power transmission device (10, 40, 50) according to any one of claim 2 through claim 8, **characterized in that** the power shutoff member (13) and the hub (12, 41) are made of a material which has a different coefficient of friction from the coefficient of friction of the rotary shaft (15) and the cylinder(14, 51).

10. Compressor including the power transmission device (10, 40, 50) according to any one of claim 1 through claim 9, in which compressor a carbon dioxide containing refrigerant gas is preferably used.
